# EUROPEAN PATENT SPECIFICATION

(11) **EP 3 826 486 B1**
(45) Date of publication and mention of the grant of the patent: **07.06.2023**
(21) Application number: 19742618.2
(22) Date of filing: 26.07.2019
(51) Int. Cl.: A24F 40/50, A24F 40/10

(54) **AEROSOL-GENERATING DEVICE HAVING IMPROVED POWER SUPPLY CONTROLLER**
AEROSOLERZEUGUNGSVORRICHTUNG MIT VERBESSERTEM STROMVERSORGUNGSSTEUERGERÄT
DISPOSITIF DE GÉNÉRATION D'AÉROSOLS À CONTRÔLEUR D'ALIMENTATION ÉLECTRIQUE AMÉLIORÉ

(30) Priority: 26.07.2018 EP 18185888
(43) Date of publication of application: 02.06.2021
(73) Proprietor: Philip Morris Products S.A., 2000 Neuchâtel (CH)
(72) Inventor: SILVESTRINI, Patrick Charles, 2000 Neuchatel (CH); ZINOVIK, Ihar Nikolaevich, 2000 Neuchatel (CH)
(74) Representative: Nevett, Duncan
(86) International application number: PCT/EP2019/070285
(87) International publication number: WO 2020/021115

(56) References cited:
- EP-A1- 3 042 576
- EP-B1- 3 000 245
- WO-A1-2015/176254
- US-A1- 2004 081 624
- US-A1- 2013 319 440
- US-A1- 2014 270 727
- US-A1- 2018 020 728

## Description

The present invention relates to aerosol-generating devices. In particular, the invention relates to aerosol-generating devices having a heating element for heating an aerosol-forming substrate. The present invention also relates to an aerosol-generating systems including such aerosol-generating devices in combination with an aerosol-generating article or cartridge for use with the aerosol-generating device.

In a number of handheld aerosol-generating devices, an electrically operated heating element may be used for heating an aerosol-forming substrate to generate an aerosol. The heating element may be controlled by a controller. In particular, the controller may be configured to instigate the supply of electrical power to the heating element when a user draws or puffs on the aerosol-generating device, so that aerosol can be provided for that puff. To achieve this, the aerosol-generating device may comprise a sensor for sensing airflow within the aerosol-generating device. The sensed airflow can be indicative of suction caused by the user taking a puff, and can therefore be used to instigate the supply of electrical power to the heating element, and consequently, the delivery of aerosol for that puff. Such devices may be known as puff driven devices.

In such puff driven devices, a predetermined amount of power is supplied to heating element each time a user puffs on the aerosol-generating device. However, such arrangements may lead to undesirable effects. For example, if the intensity of a given puff is low, then not all vapour may be evacuated from the airflow channel in the device. This may cause a build-up of liquid on the walls of the device, which could affect the performance of the device for subsequent puffs. Such liquid could also eventually transfer to the mouth of a user. Another drawback may occur if the intensity of a given puff is high, since the power delivered to the heating element may not be large enough to result in the delivery of a sufficient amount of aerosol from said puff.

It would therefore be desirable to provide an aerosol-generating device which does not suffer from such drawbacks.

US2013/0319440 discloses an electronic cigarette and methods for controlling the power to the electronic cigarette which provides various modes of operation, including both regulated and no-regulated mode. The method is implemented in the form of an electronic power control program that controls the constituent parts of the electronic cigarette, including the battery, atomizer, heating element, smoke liquid or juice, and related circuitry.

The present invention is defined by the appended claims, to which reference should now be made.

The present inventors have appreciated that an advantageous solution to providing a user with an improved experience is to adjust or control the amount of power which is supplied to the heating element for a given puff, depending on the length of time between the start of said given puff and the end of the puff immediately preceding said given puff.

Therefore, according to the claimed invention, there is provided an aerosol-generating device comprising: an air inlet; an air outlet; an air flow passage extending between the air inlet and the air outlet; a heating element for heating an aerosol-forming substrate; a sensor assembly in communication with the air flow passage, the sensor assembly being configured to measure one or both of a flow rate and a pressure level within the air flow passage; and a controller coupled to the sensor assembly and configured to control a supply of power to the heating element, wherein the controller is further configured to receive data from the sensor assembly and determine when a user puffs on the aerosol-generating device and record the time at which each puff starts and the time at which each puff ends, and wherein the amount of power supplied to the heating element for a given puff is dependent on the length of time between the start of said given puff and the end of the puff immediately preceding said given puff. The controller is configured to: instigate the supply of a first amount of power to the heating element for a first length of time between the start of a given puff and the end of the puff immediately preceding said given puff; and instigate the supply of a second amount of power to the heating element for a second length of time between the start of a given puff and the end of the puff immediately preceding said given puff; and wherein the first length of time is greater than the second length of time, and the first amount of power is greater than the second amount of power, and wherein the controller is further configured to adjust the amount of power supplied for said given puff based on the period of time which has elapsed between two or more of the preceding puffs.

By arranging for the amount of power supplied to the heating element for a given puff to be dependent on the length of time between the start of said given puff and the end of the puff immediately preceding said given puff, the aerosol delivery can be adjusted to accommodate for a user's recent experience. For example, if only a short amount of time has elapsed since the user's last puff, it may be desirable to supply a relatively low amount of power for the user's next puff. Similarly, if a long time has elapsed since the user's last puff, it may be desirable to supply a relatively high amount of power for the user's next puff.

Preferred features of the claimed invention are described below.

The controller may be configured such that any number of different power levels can be supplied to the heating element for any given puff. For example, the controller may utilise an algorithm, which calculates the amount of power that should be supplied to the heating element for a given puff, based on a value measured by the sensor assembly at the start of said given puff. The controller may be configured so that a constant level of power is supplied to the heating element during a given puff.

The controller and sensor assembly may be configured so that one or both of the flow rate and the pressure level are repeatedly measured during a given puff, with the amount of power being supplied to the heating element being dependent on the repeated measurements. In such embodiments, a varying level of power may be supplied to the heating element during a given puff. For example, one or both of the flow rate and the pressure level may be measured at set time intervals within the duration of a given puff, and if one or both of the flow rate and the pressure level change between any two adjacent measurement points, then the amount of power being supplied to the heating element is adjusted so that the supplied power level is based on the most recently measured value for one or both of the flow rate and the pressure level. Such an arrangement can advantageously allow for dynamic adjustment of the heating element performance and thus aerosol delivery.

The duration of the time interval may be at least 0.05 milliseconds, preferably at least 10 milliseconds, more preferably at least 100 milliseconds. The duration of the time interval may be 300 milliseconds or less, preferably 100 milliseconds or less, more preferably 10 milliseconds or less.

In some preferred embodiments, the controller is configured to use a look-up table for determining the amount of power to be supplied to the heating element. The look-up table may comprise a set of power values and one or both of a set of flow rate parameters and a set of pressure level parameters, and wherein the look-up table associates each power value with a corresponding flow rate parameter, pressure level parameter, or both. The flow rate parameter may be a single flow rate value or may be a range of flow rate values. The pressure level parameter may be a single pressure level value or may be a range of pressure level values.

By way of example, if the sensor assembly measures a first flow rate during a given puff, the controller can determine which range of flow rate values in the look-up table encompasses said first flow rate, determine which power value corresponds to said determined range of flow rate values, and instigate the supply of said power value to the heating element.

The look-up table or look-up tables described herein may each be stored in a computer readable memory accessible to the controller. The computer readable memory may be provided within the aerosol-generating device. The computer readable memory may be stored externally to the aerosol-generating device, but accessible to the aerosol-generating device, by, for example, a wireless communication link.

In the present invention, the amount of power supplied to the heating element is dependent on the length of time between the start of a given puff and the end of the puff immediately preceding said given puff.

In particular, if the controller determines there to be a first length of time between the start of a given puff and the end of the puff immediately preceding said given puff, then the controller is configured to instigate the supply of a first amount of power to the heating element, whereas if the controller determines there to be a second length of time between the start of a given puff and the end of the puff immediately preceding said given puff, then the controller is configured to instigate the supply of a second amount of power to the heating element. In such an arrangement, the first length of time is greater than the second length of time, and the first amount of power is greater than the second amount of power. Put another way, the controller may be configured to arrange for the supply of an increased amount of power to the heating element when a longer period of time elapses between puffs.

In the present invention, the controller is configured to further adjust the amount of power supplied for said given puff based on historic measurements for one or more puffs preceding said given puff. The historic measurements includes the period of time which has elapsed between two or more of the preceding puffs, such as the period of time which has elapsed between a first preceding puff and a second preceding puff. The historic measurements may include an estimated or calculated amount of nicotine, which has been delivered by the aerosol-generating device during the current use session.

The controller may be configured to determine start and end times for a given puff in a number of ways. As one example, the controller may monitor the data received from the sensor assembly and determine that a puff has started because one or both of the measured flow rate and pressure level has rapidly changed from a steady state value or range of values to a non-steady state value. In the case of flow rate, this may be when the measured flow rate value rapidly changes from no value being measured or a low value being measured to a higher value being measured. Accordingly, in some embodiments, the controller may be configured to determine that a puff has started because one or both of the measured flow rate and pressure level values has risen above a predefined threshold value. The point in time at which the measured value rises above the predefined threshold value may be defined as the start time for the puff.

Therefore, preferably, the controller is configured to determine whether a data value sent to the controller from the sensor assembly exceeds a threshold value, and if the data value exceeds the threshold value, determine that said data value indicates the start of a puff.

Similarly, the controller may be configured to determine that a puff has finished because one or both of the measured flow rate and pressure level values has fallen below a predefined threshold value. The point in time at which the measured value falls below the predefined threshold value may be defined as the end time for the puff. The length of time between the start time of a given puff and the end time of the given puff may be defined as the puff duration for said given puff.

Therefore, preferably, the controller is configured to determine whether a data value sent to the controller from the sensor assembly is below a threshold value, and if the data value is below the threshold value, determine that said data value indicates the end of a puff.

In some preferred embodiments, the controller is configured to use a look-up table for determining the amount of power to be supplied to the heating element, the look-up table comprising a set of power values and a set of time ranges, and wherein the look-up table associates each power value with a corresponding time range. By way of example, if the controller determines there to be a first length of time between the start of a given puff and the end of the puff immediately preceding said given puff, then the controller can determine which time range encompasses said first length of time, determine which power value corresponds to said determined time range, and instigate the supply of said power value to the heating element for said given puff.

In some embodiments, the amount of power supplied to the heating element for a given puff is dependent on the puff number of said given puff.

In some preferred embodiments, the controller is configured such that no power is supplied to the heating element when a given puff is occurring, if the puff number assigned to said given puff exceeds a threshold value. This may be advantageous if there is a desire to limit the number of puffs that a user can have on the aerosol-generating device.

In some embodiments, the aerosol-generating device may be provided with a means for resetting the puff numbers. For example, the aerosol-generating device may be provided with a button which allows a user to reset the puff number to zero. Alternatively or additionally, the aerosol-generating device may be configured such that the puff number resets to zero after a predefined amount of time has passed since a certain numbered puff occurred. By way of example, if the aerosol-generating device is configured so that only seven puffs can be taken during a single use session, then the aerosol-generating device may be configured so that the puff number is reset to zero ten minutes after the seventh puff has occurred.

In some preferred embodiments, the controller is configured to use a look-up table for determining the amount of power to be supplied to the heating element for a given puff number, the look-up table comprising a set of power values and a set of puff numbers, and wherein the look-up table associates each power value with a corresponding puff number. More specifically, the look-up table may comprise a set of power values and a set of puff numbers, and wherein each power value of the look-up table is different from the other power values of the look-up table, and wherein the look-up table associates each power value with one puff number in the set of puff numbers. By way of example, if the controller determines that a given puff is the first puff in the current use session, then the controller can determine which power value in the look-up table corresponds to the first puff number, and instigate the supply of said power value to the heating element for said given puff. However, if the controller determines that a given puff is the sixth puff in the current use session, then the controller can determine which power value in the look-up table corresponds to the sixth puff number, and instigate the supply of said power value to the heating element for said given puff.

The aerosol-generating device may comprise a power supply electrically connectable to the heating element. The power supply is preferably configured to provide an alternating electric current to the heating element. The power supply may be disposed within the housing of the device. The power supply may be a DC power supply. The power supply may be a battery. The battery may be a Lithium based battery, for example a Lithium-Cobalt, a Lithium-Iron-Phosphate, a Lithium Titanate or a Lithium-Polymer battery. The battery may be a Nickelmetal hydride battery or a Nickel cadmium battery. The power supply may be another form of charge storage device such as a capacitor. The power supply may require recharging and be configured for many cycles of charge and discharge. The power supply may have sufficient capacity to allow for a predetermined number of puffs or discrete activations of an atomising assembly.

The controller may comprise control circuitry configured to control a supply of power from the power supply to the heating element. The control circuitry may comprise a microcontroller. The microcontroller is preferably a programmable microcontroller. The control circuitry may comprise further electronic components. The control circuitry may be configured to regulate a supply of power to the heating element.

The aerosol-generating system may comprise a first power supply arranged to supply power to the control circuitry and a second power supply configured to supply power to the heating element.

The sensor assembly comprises at least one sensor configured to measure one or both of a flow rate and a pressure level. The at least one sensor may comprise one or more of a temperature sensor, a flow sensor and a pressure level sensor.

The sensor assembly is in fluid communication with the air flow passage and configured to measure one or both of a flow rate and a pressure level within the air flow passage. The sensor assembly may therefore comprise at least one sensor disposed within the air flow passage. Alternatively or additionally, the sensor assembly may comprise at least one sensor spaced from the air flow passage but in fluid communication with the air flow passage.

In some preferred embodiments, the sensor assembly comprises a first pressure level sensor and a second pressure level sensor spaced along the air flow passage. Such an arrangement may allow for a calculation of a flow rate within the air flow passage by analysing the differential between the pressure levels respectively measured by the first and second pressure level sensors.

The present disclosure includes the provision of an aerosol-generating system comprising an aerosol-generating device according to the claimed invention, and a cartridge comprising a liquid storage portion containing a supply of liquid aerosol-forming substrate.

The present disclosure includes the provision of an aerosol-generating system comprising an aerosol-generating device according to the claimed invention, and a cartridge comprising: a first compartment containing a nicotine source; a second compartment containing an acid source; a mixing chamber for mixing nicotine from the nicotine source and acid from the acid source with an air flow to form an aerosol; and wherein the heating element is configured to heat the mixing chamber.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

The heating element of the present invention is electrically operated and configured to receive a supply of electrical power. The electrically operated heating element may have a number of different configurations. For example, the heating element may comprise a coil. The coil may extend around a wick which is configured to transport liquid from a storage portion containing a liquid aerosol-generating substrate to a location adjacent to the coil. The coil heating element can be used to vaporise the transported liquid to produce an aerosol.

Preferably, the heating element is a substantially flat electrically conductive and fluid permeable heating element, such as a mesh. For example, the heating element may be an array of filaments, for example arranged parallel to each other.

Preferably the electrically operable heating element comprises a magnetic material. Suitable magnetic materials for the heating element include ferrites, electrical steel, and permalloy.

As used herein with reference to the invention, the term "air inlet" is used to describe one or more apertures through which air may be drawn into a component or portion of a component of the cartridge or aerosol-generating device.

As used herein with reference to the invention, the term "air outlet" is used to describe one or more apertures through which air may be drawn out of a component or portion of a component of the cartridge or aerosol-generating device.

As used herein with reference to the invention, the terms "proximal", "distal", "upstream" and "downstream" are used to describe the relative positions of components, or portions of components, of the cartridge and aerosol-generating system.

As used herein with reference to the invention, the term "longitudinal" is used to describe the direction between the proximal end and the opposed distal end of the cartridge or aerosol-generating system and the term "transverse" is used to describe the direction perpendicular to the longitudinal direction.

As used herein with reference to the invention, the term "length" is used to describe the maximum longitudinal dimension of components, or portions of components, of the cartridge or aerosol-generating system parallel to the longitudinal axis between the proximal end and the opposed distal end of the cartridge or aerosol-generating system.

As used herein with reference to the invention, the terms "height" and "width" are used to describe the maximum transverse dimensions of components, or portions of components, of the cartridge or aerosol-generating system or aerosol-generating device perpendicular to the longitudinal axis of the cartridge or aerosol-generating system. Where the height and width of components, or portions of components, of the cartridge or aerosol-generating system are not the same, the term "width" is used to refer to the larger of the two transverse dimensions perpendicular to the longitudinal axis of the cartridge or aerosol-generating system.

As used herein with reference to the invention, the term "elongate" is used to describe a component or portion of a component having a length greater than the width and height thereof.

As used herein with reference to the invention, the term "nicotine", is used to describe nicotine, nicotine base or a nicotine salt. In embodiments in which the first carrier material is impregnated with nicotine base or a nicotine salt, the amounts of nicotine recited herein are the amount of nicotine base or amount of ionised nicotine, respectively.

As used herein, the term 'aerosol former' is used to describe any suitable known compound or mixture of compounds that, in use, facilitates formation of an aerosol.

As used herein, the terms 'upstream' and 'downstream' are used to describe the relative positions of elements, or portions of elements, of the heater assembly, cartridge, or aerosol-generating system in relation to the direction in which air is drawn through the system during use thereof.

As used herein, the term 'longitudinal' is used to describe the direction between the upstream end and the downstream end of the heater assembly, cartridge, or aerosol-generating system and the term 'transverse' is used to describe the direction perpendicular to the longitudinal direction. With reference to the heater assembly, the term 'transverse' refers to the direction parallel to the plane of the porous sheet or sheets, while the term 'perpendicular' refers to the direction perpendicular to the plane of the porous sheet or sheets.

The aerosol-generating system may be a handheld aerosol-generating system configured to allow a user to suck on a mouthpiece to draw an aerosol through the mouth end opening. The aerosol-generating system may have a size comparable to a conventional cigar or cigarette. The aerosol-generating system may have a total length between about 30 mm and about 150 mm. The aerosol-generating system may have an external diameter between about 5 mm and about 30mm.

The present disclosure also relates to a method or methods which may be performed by the aerosol-generating devices described above. Therefore, according to a the present disclosure, there is provided a method for operating an aerosol-generating device, the method comprising: measuring one or both of a flow rate and a pressure level within an air flow passage of the aerosol-generating device; receiving at least one measured value for one or both of the flow rate and the pressure level; analysing the at least one measured value and determining when a user puffs on the aerosol-generating device; recording the time at which each puff starts and the time at which each puff ends; and controlling a supply of power to a heating element of the aerosol-generating device, wherein the amount of power supplied to the heating element for a given puff is dependent on the length of time between the start of said given puff and the end of the puff immediately preceding said given puff.

The present disclosure also incorporates preferred method steps for each of the seventh, eighth and ninth aspects of the invention based on the preferred functionality described above in respect of the controller and sensor assembly. By way of example, in preferred embodiments, the controller is further configured to use a look-up table for determining the amount of power to be supplied to the heating element. Consequently, the present disclosure also incorporates a preferred method step of using a look-up table for determining the amount of power to be supplied to the heating element.

To assist with an understanding of embodiments of the invention, the following detailed description of the accompanying drawings is provided, in which:
Figure 1 shows a schematic view of an aerosol-generating system not in accordance with the present invention;
Figure 2 is a block diagram of a controller for use in an aerosol-generating device not in accordance with the present invention; and
Figures 3A-3C depict look-up tables for use by the controller of Figures 1 and 2.

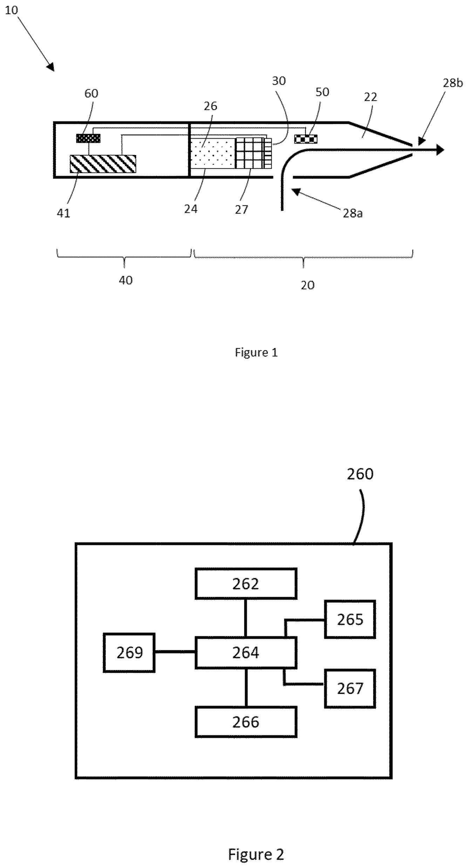

Figure 1 is a schematic view of an aerosol-generating system 10 comprising a cartridge 20, and an aerosol-generating device 40 that are coupled together. The device comprises a power supply 41, in the form of a battery, and controller 60 comprising control circuitry coupled to the power supply 41.

The cartridge assembly 20 comprises a housing 22, which forms a mouthpiece for the system. Within the housing there is a storage container 24 holding liquid aerosol-forming substrate 26. A capillary body 27 is disposed adjacent to an open end of the liquid storage container 24. An electric heater 30 is provided adjacent to an outer surface of the capillary body 27, so that the capillary body 27 can convey the liquid aerosol-forming substrate 26 from the liquid storage container 26 to the electric heater 30. The capillary body 27 and the electric heater 30 together form at least part of a heater assembly 31.

The electric heater 30 is also disposed adjacent to an airflow path in the cartridge 20. The airflow path is indicated by a curved arrow in Figure 1. The airflow path extends from an air inlet 28a to an air outlet 28b formed at a mouth end opening in the cartridge housing 22.

When the cartridge 20 is coupled to the aerosol-generating device 40 as shown in Figure 1, the electric heater 30 is electrically coupled to the power supply 41. The device 40 therefore functions to supply electrical power to the electric heater 30 in the cartridge 20 in order to vaporise the liquid aerosol-forming substrate. The vaporised aerosol-forming substrate is entrained in an airflow through the system, the airflow resulting from a user puffing on a mouth end of the cartridge 20. The vaporised aerosol-forming substrate cools in the airflow to form an aerosol before being drawn into a user's mouth.

A sensor assembly 50 comprising a pressure level sensor is disposed in the cartridge 20 adjacent to the airflow path. The sensor assembly 50 is coupled to the controller 60 and configured to send measurement data from the pressure level sensor to the controller 60. Although the sensor assembly 50 is shown in Figure 1 as being disposed within the cartridge 20, it will be appreciated that the sensor assembly 50 could alternatively be disposed within the device 20. The aerosol-generating system of Figure 1 is not in accordance with the invention only in the sense that the controller 60 in Figure 1 is not specifically described as being configured to adjust the amount of power supplied for said given puff based on the period of time which has elapsed between two or more of the preceding puffs.

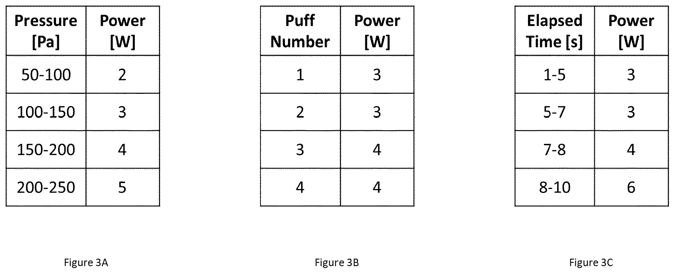

Figure 2 is a block diagram of a controller 260 not in accordance with the present invention. The controller 260 of Figure 2 is not in accordance with the invention only in the sense that it is not specifically described as being configured to adjust the amount of power supplied for said given puff based on the period of time which has elapsed between two or more of the preceding puffs. The controller includes a receiving module 262 configured to receive measurement data from the sensor assembly 50, a determining module 264 configured to determine an amount of power to be supplied to the heating element 30, and a power supplying module 266 configured to initiate the supply of power to the heating element 30. The determining module 264 is coupled to a clock 265, at least one look-up table 267, and a computer readable memory 269. Exemplary look-up tables 267 are shown in Figures 3A to 3C.

In a first exemplary implementation, the receiving module 262 of the controller 260 receives a measurement value from the sensor assembly 50 and relays this measurement value to the determining module 264. The determining module 264 uses the first look-up table 267A of Figure 3A to determine which pressure range in the first look-up table 267A encompasses the measurement value. The determining module then determines which power value in the first look-up table 267A corresponds to said pressure range. The power supply module 266 then initiates the supply of this power level to the heating element 30. For example, if the measurement value is 80 Pascals then the heating element is supplied with a power level of 2 Watts, whereas if the measurement value is 180 Pascals then the heating element is supplied with a power level of 4 Watts. In the first exemplary implementation, the measurement values may be sent from the sensor assembly 50 to the receiving module 262 of the controller 260 every 100 milliseconds. Each time a measurement value is received at the controller 260, a power level for the heating element is calculated, so that the amount of power supplied to the heating element can be continuously adjusted.

In a second exemplary implementation, the receiving module 262 of the controller 260 repeatedly receives measurement values from the sensor assembly 50 and relays these measurement values to the determining module 264. The determining module 264 analyses the received measurement values and determines when the measurement value rises above a first predefined threshold value stored in the computer readable memory 269, and rises below a second predefined threshold value stored in the computer readable memory 269. Each time this occurs, the determining module 264 uses the clock 265 to establish a time point for each rise and fall, and records this temporal information in the computer readable memory 269 as the time at which each puff on the aerosol-generating device starts and the time at which each puff on the aerosol-generating device ends. The determining module 264 then uses this recorded data to determine the length of time between puffs. The determining module 264 then compares this determined length of time with the elapsed time ranges in the second look-up table of Figure 3C to establish a power level value, which should be supplied to the heating element 30 for the current puff. The power supply module 266 then initiates the supply of this power level to the heating element 30.

In a third exemplary implementation, the receiving module 262 of the controller 260 repeatedly receives measurement values from the sensor assembly 50 and relays these measurement values to the determining module 264. In a similar manner to the second implementation, the determining module analyses the measurement values to establish when a puff is made on the aerosol-generating device 10. However, in the third exemplary implementation, the determining module 264 further assigns a puff number to each puff that is made on the aerosol-generating device 10. In particular, in the third implementation, when the determining module 264 detects that the measurement value rises above the first predefined threshold value, the determining module 264 determines that a new puff is being made on the device. The determining module 264 then assigns a puff number of n + 1 to the current puff, where n is the puff number of the most recent puff on the device. The determining module 264 then compares the assigned puff number with the puff numbers contained in the third look-up table of Figure 3B and identifies the power level that corresponds to said puff number. The power supply module 266 then initiates the supply of this identified power level to the heating element 30 for use during the current puff.

## Claims

1. An aerosol-generating device (40) comprising:
an air inlet (28a);
an air outlet (28b);
an air flow passage extending between the air inlet and the air outlet;
a heating element (30) for heating an aerosol-forming substrate (26);
a sensor assembly (50) in communication with the air flow passage, the sensor assembly being configured to measure one or both of a flow rate and a pressure level within the air flow passage; and
a controller (60) coupled to the sensor assembly and configured to control a supply of power to the heating element (30), wherein the controller is further configured to receive data from the sensor assembly (50) and determine when a user puffs on the aerosol-generating device (40) and record the time at which each puff starts and the time at which each puff ends,
and wherein the amount of power supplied to the heating element (30) for a given puff is dependent on the length of time between the start of said given puff and the end of the puff immediately preceding said given puff, such that:
the controller (60) is configured to:
instigate the supply of a first amount of power to the heating element (30) for a first length of time between the start of a given puff and the end of the puff immediately preceding said given puff; and
instigate the supply of a second amount of power to the heating element (30) for a second length of time between the start of a given puff and the end of the puff immediately preceding said given puff; and
wherein the first length of time is greater than the second length of time, and the first amount of power is greater than the second amount of power, and
wherein the controller (60) is further configured to adjust the amount of power supplied for said given puff based on the period of time which has elapsed between two or more of the preceding puffs.

2. An aerosol-generating device (40) according to claim 1, wherein the controller (60) is further configured to adjust the amount of power supplied for said given puff based on the period of time which has elapsed between a first preceding puff and a second preceding puff.

3. An aerosol-generating device (40) according to claim 1 or claim 2, wherein the controller (60) is further configured to determine whether a data value sent to the controller from the sensor assembly (50) exceeds a threshold value, and if the data value exceeds the threshold value, determine that said data value indicates the start of a puff.

4. An aerosol-generating device (40) according to any one of claims 1 to 3, wherein the controller (60) is further configured to determine whether a data value sent to the controller from the sensor assembly is below a threshold value, and if the data value is below the threshold value, determine that said data value indicates the end of a puff.

5. An aerosol-generating device (40) according to any one of claims 1 to 4, wherein the controller (60) is further configured to use a look-up table for determining the amount of power to be supplied to the heating element (30), the look-up table comprising a set of power values and a set of time ranges, and wherein the look-up table associates each power value with a corresponding time range.

6. An aerosol-generating device (40) according to any one of the preceding claims, wherein the sensor assembly (50) comprises at least one sensor disposed within the air flow passage.

7. An aerosol-generating device (40) according to claim 6, wherein the sensor assembly (50) comprises a first pressure level sensor and a second pressure level sensor spaced along the air flow passage.

8. An aerosol-generating device (40) according to any one of the preceding claims, wherein the heating element (30) comprises a mesh.

9. An aerosol-generating system (10) comprising an aerosol-generating device (40) according to any one of the preceding claims, and at least one an aerosol-generating article or cartridge (20) for use with the aerosol-generating device.

## Patentansprüche

1. Aerosolerzeugungsvorrichtung (40), aufweisend:
einen Lufteinlass (28a);
einen Luftauslass (28b):
einen sich zwischen dem Lufteinlass und dem Luftauslass erstreckenden Luftströmungskanal;
ein Heizelement (30) zum Erwärmen eines aerosolbildenden Substrats (26);
eine mit dem Luftströmungskanal in Verbindung stehende Sensorbaugruppe (50), wobei die Sensorbaugruppe zum Messen einer Strömungsgeschwindigkeit und/oder eines Druckpegels innerhalb des Luftströmungskanals ausgelegt ist; und
eine mit der Sensorbaugruppe gekoppelte und zum Steuern einer Energieversorgung an das Heizelement (30) ausgelegte Steuerung (60), wobei die Steuerung ferner zum Empfangen von Daten von der Sensorbaugruppe (50) und zum Ermitteln, wann ein Benutzer an der Aerosolerzeugungsvorrichtung (40) zieht, und zum Aufzeichnen der Uhrzeit, zu der jeder Zug beginnt, und der Uhrzeit, zu der jeder Zug endet, ausgelegt ist,
und wobei die dem Heizelement (30) für einen bestimmten Zug zugeführte Energiemenge von der Zeitdauer zwischen dem Beginn des bestimmten Zuges und dem Ende des dem bestimmten Zug unmittelbar vorhergehenden Zuges abhängig ist, sodass:
die Steuerung (60) ausgelegt ist zum:
Einleiten der Versorgung des Heizelements (30) mit einer ersten Energiemenge für eine erste Zeitspanne zwischen dem Beginn eines bestimmten Zuges und dem Ende des unmittelbar vorhergehenden Zuges; und
Einleiten der Versorgung des Heizelements (30) mit einer zweiten Energiemenge für eine zweite Zeitspanne zwischen dem Beginn eines bestimmten Zuges und dem Ende des unmittelbar vorhergehenden Zuges; und
wobei die erste Zeitspanne größer ist als die zweite Zeitspanne und die erste Energiemenge größer ist als die zweite Energiemenge, und
wobei die Steuerung (60) ferner zum Anpassen der für den bestimmten Zug zugeführten Energiemenge basierend auf der Zeitspanne ausgelegt ist, die zwischen zwei oder mehr der vorhergehenden Züge verstrichen ist.

2. Aerosolerzeugungsvorrichtung (40) nach Anspruch 1, wobei die Steuerung (60) ferner zum Anpassen der für den bestimmten Zug zugeführten Energiemenge basierend auf der Zeitspanne ausgelegt ist, die zwischen einem ersten vorhergehenden Zug und einem zweiten vorhergehenden Zug verstrichen ist.

3. Aerosolerzeugungsvorrichtung (40) nach Anspruch 1 oder Anspruch 2, wobei die Steuerung (60) ferner zum Ermitteln ausgelegt ist, ob ein von der Sensorbaugruppe (50) an die Steuerung gesendeter Datenwert einen Schwellenwert überschreitet, und wenn der Datenwert den Schwellenwert überschreitet, zum Ermitteln, dass der Datenwert den Beginn eines Zuges anzeigt.

4. Aerosolerzeugungsvorrichtung (40) nach einem der Ansprüche 1 bis 3, wobei die Steuerung (60) ferner zum Ermitteln ausgelegt ist, ob ein von der Sensorbaugruppe an die Steuerung gesendeter Datenwert unterhalb eines Schwellenwerts liegt, und wenn der Datenwert unterhalb des Schwellenwerts liegt, zum Ermitteln, dass der Datenwert das Ende eines Zuges anzeigt.

5. Aerosolerzeugungsvorrichtung (40) nach einem der Ansprüche 1 bis 4, wobei die Steuerung (60) ferner zum Verwenden einer Nachschlagetabelle zum Ermitteln der dem Heizelement (30) zuzuführenden Energiemenge ausgelegt ist, wobei die Nachschlagetabelle einen Satz von Energiewerten und einen Satz von Zeitbereichen umfasst, und wobei die Nachschlagetabelle jeden Energiewert einem entsprechenden Zeitbereich zuordnet.

6. Aerosolerzeugungsvorrichtung (40) nach einem der vorhergehenden Ansprüche, wobei die Sensorbaugruppe (50) wenigstens einen innerhalb des Luftströmungskanals angeordneten Sensor umfasst.

7. Aerosolerzeugungsvorrichtung (40) nach Anspruch 6, wobei die Sensorbaugruppe (50) einen ersten Druckpegelsensor und einen zweiten Druckpegelsensor aufweist, die entlang des Luftströmungskanals beabstandet sind.

8. Aerosolerzeugungsvorrichtung (40) nach einem der vorhergehenden Ansprüche, wobei das Heizelement (30) ein Netz aufweist.

9. Aerosolerzeugungssystem (10), umfassend eine Aerosolerzeugungsvorrichtung (40) nach einem beliebigen der vorhergehenden Ansprüche, und wenigstens einen aerosolerzeugenden Artikel oder eine Patrone (20) zum Gebrauch mit der Aerosolerzeugungsvorrichtung.

## Revendications

1. Dispositif de génération d'aérosol (40) comprenant :
une entrée d'air (28a) ;
an sortie d'air (28b) ;
un passage d'écoulement d'air s'étendant entre l'entrée d'air et la sortie d'air ;
un élément de chauffage (30) pour le chauffage d'un substrat formant aérosol (26) ;
un ensemble capteur (50) en communication avec le passage d'écoulement d'air, l'ensemble capteur étant configuré pour mesurer un ou les deux parmi un débit et un niveau de pression au sein du passage d'écoulement d'air ; et
un dispositif de commande (60) couplé à l'ensemble capteur et configuré pour commander une alimentation électrique de l'élément de chauffage (30), dans lequel le dispositif de commande est en outre configuré pour recevoir des données provenant de l'ensemble capteur (50) et déterminer quand un utilisateur tire des bouffées du dispositif de génération d'aérosol (40) et enregistrer l'heure à laquelle chaque bouffée commence et l'heure à laquelle chaque bouffée se termine,
et dans lequel la quantité d'énergie alimentée vers l'élément de chauffage (30) pour une bouffée donnée dépend de la durée entre le début de ladite bouffée donnée et la fin de la bouffée précédant immédiatement ladite bouffée donnée, de sorte que :
le dispositif de commande (60) est configuré pour :
lancer l'alimentation d'une première quantité d'énergie vers l'élément de chauffage (30) pendant une première durée entre le début d'une bouffée donnée et la fin de la bouffée précédant immédiatement ladite bouffée donnée ; et
lancer l'alimentation d'une deuxième quantité d'énergie vers l'élément de chauffage (30) pendant une deuxième durée entre le début d'une bouffée donnée et la fin de la bouffée précédant immédiatement ladite bouffée donnée ; et
dans lequel la première durée est supérieure à la deuxième durée, et la première quantité d'énergie est supérieure à la deuxième quantité d'énergie, et
dans lequel le dispositif de commande (60) est en outre configuré pour ajuster la quantité d'énergie alimentée pour ladite bouffée donnée sur la base de la période de temps qui s'est écoulée entre deux ou plus des bouffées précédentes.

2. Dispositif de génération d'aérosol (40) selon la revendication 1, dans lequel le dispositif de commande (60) est en outre configuré pour ajuster la quantité d'énergie alimentée pour ladite bouffée donnée sur la base de la période de temps qui s'est écoulée entre une première bouffée précédente et une deuxième bouffée précédente.

3. Dispositif de génération d'aérosol (40) selon la revendication 1 ou la revendication 2, dans lequel le dispositif de commande (60) est en outre configuré pour déterminer si une valeur de données envoyée au dispositif de commande depuis l'ensemble capteur (50) dépasse une valeur seuil, et si la valeur de données dépasse la valeur seuil, déterminer que ladite valeur de données indique le début d'une bouffée.

4. Dispositif de génération d'aérosol (40) selon l'une quelconque des revendications 1 à 3, dans lequel le dispositif de commande (60) est en outre configuré pour déterminer si une valeur de données envoyée au dispositif de commande depuis l'ensemble capteur est en dessous d'une valeur seuil, et si la valeur de données est en dessous de la valeur seuil, déterminer que ladite valeur de données indique la fin d'une bouffée.

5. Dispositif de génération d'aérosol (40) selon l'une quelconque des revendications 1 à 4, dans lequel le dispositif de commande (60) est en outre configuré pour utiliser une table de consultation afin de déterminer la quantité d'énergie à alimenter vers l'élément de chauffage (30), la table de consultation comprenant une série de valeurs d'énergie et une série de plages de temps, et dans lequel la table de consultation associe chaque valeur d'énergie à une plage de temps correspondante.

6. Dispositif de génération d'aérosol (40) selon l'une quelconque des revendications précédentes, dans lequel l'ensemble capteur (50) comprend au moins un capteur disposé au sein du passage d'écoulement d'air.

7. Dispositif de génération d'aérosol (40) selon la revendication 6, dans lequel l'ensemble capteur (50) comprend un premier capteur de niveau de pression et un deuxième capteur de niveau de pression espacés le long du passage d'écoulement d'air.

8. Dispositif de génération d'aérosol (40) selon l'une quelconque des revendications précédentes, dans lequel l'élément de chauffage (30) comprend un treillis.

9. Système de génération d'aérosol (10) comprenant un dispositif de génération d'aérosol (40) selon l'une quelconque des revendications précédentes et au moins un article de génération d'aérosol ou une cartouche (20) pour une utilisation avec le dispositif de génération d'aérosol.
